# EUROPÄISCHE PATENTSCHRIFT

(11) **EP 3 215 048 B1**
(45) Veröffentlichungstag und Bekanntmachung des Hinweises auf die Patenterteilung: **20.05.2020**
(21) Anmeldenummer: 15790115.8
(22) Anmeldetag: 03.11.2015
(51) Int. Cl.: A61C 8/00

(54) **ABUTMENTAUFSATZ**
ABUTMENT ATTACHMENT
EMBASE DE PILIER

(30) Priorität: 03.11.2014 DE 102014016081
(43) Veröffentlichungstag der Anmeldung: 13.09.2017
(73) Patentinhaber: Gadau, Curd, 63856 Bessenbach (DE)
(72) Erfinder: Gadau, Curd, 63856 Bessenbach (DE)
(74) Vertreter: Baldus, Oliver
(86) Internationale Anmeldenummer: PCT/EP2015/075539
(87) Internationale Veröffentlichungsnummer: WO 2016/071315

(56) Entgegenhaltungen:
- EP-A1- 2 732 791
- WO-A1-2012/039819
- DE-A1-102012 106 468

## Beschreibung

Die vorliegende Erfindung betrifft einen Abutmentaufsatz, der auf einem Kieferimplantat befestigbar ist.

Die Druckschrift DE 10 2012 106 468 A1 betrifft ein Zahnimplantataufbausystem mit einem Abutmentaufsatz für ein Kieferimplantat, mit einem Befestigungsabschnitt zum Befestigen des Abutmentaufsatzes auf dem Kieferimplantat; und einer gegenüber dem Befestigungsabschnitt seitlich versetzten Klebebasis zum Aufkleben eines Kronenklebekörpers.

Die Druckschrift EP 2 732 791 A1 betrifft ein Zahnimplantat. Das Zahnimplantat umfasst eine Öffnung, die sich auf der Seitenfläche eines Abutmentverbindungsabschnittes befindet.

Die Druckschrift WO 2012/039819 A1 betrifft Abutments zur Verwendung mit einem Zahnimplantat. Ein abgewinkeltes Abutment weist eine Bohrung auf.

Es ist die Aufgabe der vorliegenden Erfindung, einen Abutmentaufsatz bereitzustellen, der einen größeren Winkelbereich zum Aufkleben eines Klebekörpers zulässt.

Diese Aufgabe wird durch einen Gegenstand nach dem unabhängigen Anspruch gelöst. Vorteilhafte Ausführungsformen sind Gegenstand der abhängigen Ansprüche, der Beschreibung und der Zeichnungen.

Gemäß einem ersten Aspekt wird die Aufgabe durch einen Abutmentaufsatz gelöst, der auf einem Kieferimplantat befestigbar ist, mit einer im Querschnitt L-förmigen Klebebasis, deren einer Schenkel durch einen Klebebasisabschnitt und deren anderer Schenkel durch einen Kragen gebildet wird; einer Öffnung zum Einsetzen einer Befestigungsschraube und wobei der Klebebasisabschnitt zum Bilden einer Klebebasis für einen Klebekörper zungenförmig, pfostenförmig oder stiftförmig ist, der seitlich neben der Öffnung angeordnet ist und über die Öffnung hinausragt. Durch die seitlich versetzte Klebebasis kann der aufgesetzte Klebekörper eine hohe Abschrägung aufweisen. Ohne dass eine minimale Wandstärke des Materials unterschritten wird. Zudem wird durch den seitlich versetzten Klebebasisabschnitt ein Einsetzen der Befestigungsschraube nicht behindert. Die Befestigungsschraube braucht nicht um Kanten innerhalb eines Schraubkanals herumgeführt werden. Trotzdem wird eine stabile Befestigung des Klebekörpers mit einer hohen Klebefläche auf dem Abutmentaufsatz erreicht. Dadurch wird beispielsweise der technische Vorteil erreicht, dass die Aussparung des Klebekörpers auf einfache Weise mittels eines Bohrers oder Fräsers hergestellt werden kann, die Klebefläche der Klebebasis vergrößert wird und die Struktur eine hohe integrale Festigkeit aufweist.

In einer vorteilhaften Ausführungsform des Abutmentaufsatzes verläuft der Klebebasisabschnitt parallel versetzt zu einem Schraubkanal für die Befestigungsschraube. Dadurch wird beispielsweise der technische Vorteil erreicht, dass der Klebeköper auf einfache Weise in Richtung des Schraubkanals aufgesetzt werden kann.

In einer weiteren vorteilhaften Ausführungsform des Abutmentaufsatzes verjüngt sich der Klebebasisabschnitt zur Spitze hin. Dadurch wird beispielsweise der technische Vorteil erreicht, dass der Klebekörper aufgesetzt werden kann, ohne sich zu verkannten.

In einer weiteren vorteilhaften Ausführungsform des Abutmentaufsatzes ist der Klebebasisabschnitt kantenlos ausgebildet.
Dadurch wird beispielsweise der technische Vorteil erreicht, dass ein Verkanten des Klebekörpers beim Aufsetzen verhindert wird.

In einer weiteren vorteilhaften Ausführungsform des Abutmentaufsatzes verläuft der Klebebasisabschnitt im Querschnitt kreisbogenförmig zur Mitte des Schraubkanals. Dadurch wird beispielsweise der technische Vorteil erreicht, dass eine hohe Klebefläche erreicht wird und Hebelkräfte effizient aufgenommen werden können.

In einer weiteren vorteilhaften Ausführungsform des Abutmentaufsatzes sind die Seiten des Klebebasisabschnitts im Querschnitt halbkreisförmig abgerundet. Dadurch wird beispielsweise der technische Vorteil erreicht, dass die entsprechende Aussparung im Klebekörper mittels eines Radiusfräsers auf einfache Wiese hergestellt werden kann.

In einer weiteren vorteilhaften Ausführungsform des Abutmentaufsatzes weist der Kragen eine Abschrägung auf, die dem Klebebasisabschnitt gegenüberliegt. Dadurch wird beispielsweise der technische Vorteil erreicht, dass die Neigung für den Klebekörper und die Krone vergrößert werden kann.

In einer weiteren vorteilhaften Ausführungsform des Abutmentaufsatzes reicht die Abschrägung bis zu einem vorstehenden Rand zum Abstützen des Klebekörpers. Dadurch wird beispielsweise der technische Vorteil erreicht, dass ein Einsetzen der Befestigungsschraube erleichtert wird.

In einer weiteren vorteilhaften Ausführungsform des Abutmentaufsatzes reicht die Abschrägung bis zu einer Mitte des Schraubkanals. Dadurch wird beispielsweise ebenfalls der technische Vorteil erreicht, dass ein Einsetzen der Befestigungsschraube erleichtert wird.

In einer weiteren vorteilhaften Ausführungsform des Abutmentaufsatzes umfasst der Kragen Aussparungen zum Einrasten des Klebekörpers. Dadurch wird beispielsweise der technische Vorteil erreicht, dass der Klebekörper provisorisch befestigt werden kann.

In einer weiteren vorteilhaften Ausführungsform des Abutmentaufsatzes sind die Aussparungen auf gegenüberliegenden Seiten des Kragens angeordnet. Dadurch wird beispielsweise der technische Vorteil erreicht, dass der Klebekörper mit einer hohen Festigkeit provisorisch befestigt werden kann.

In einer weiteren vorteilhaften Ausführungsform des Abutmentaufsatzes geht der Kragen mit einer konkaven Aussparung in den Klebebasisabschnitt über. Dadurch wird beispielsweise der technische Vorteil erreicht, dass die Klebefläche der Klebebasis vergrößert wird und eine Positionierung des Klebekörpers auf der Klebebasis erleichtert wird.

In einer weiteren vorteilhaften Ausführungsform des Abutmentaufsatzes umfasst der Abutmentaufsatz eine Klebebasis, die gegenüber dem Schraubkanal geneigt ist. Dadurch wird beispielsweise der technische Vorteil erreicht, dass der Klebekörper unter einem Winkel gegenüber dem Schraubkanal aufgesetzt und an die räumlichen Gegebenheiten angepasst werden kann.

Ausführungsbeispiele der Erfindung sind in den Zeichnungen dargestellt und werden im Folgenden näher beschrieben.

Es zeigen:
- Fig. 1: eine Ansicht des Abutmentaufsatzes in einer Mundhöhle;
- Fig. 2: mehrere Ansichten eines Abutmentaufsatzes;
- Fig. 3: mehrere Ansichten des Abutmentaufsatzes;
- Fig. 4: zwei Aufsichten auf den Abutmentaufsatz;
- Fig. 5: eine Querschnittsansicht durch den Abutmentaufsatz; und
- Fig. 6: mehrere Ansichten des Abutmentaufsatzes in einem Übertragungspfosten.

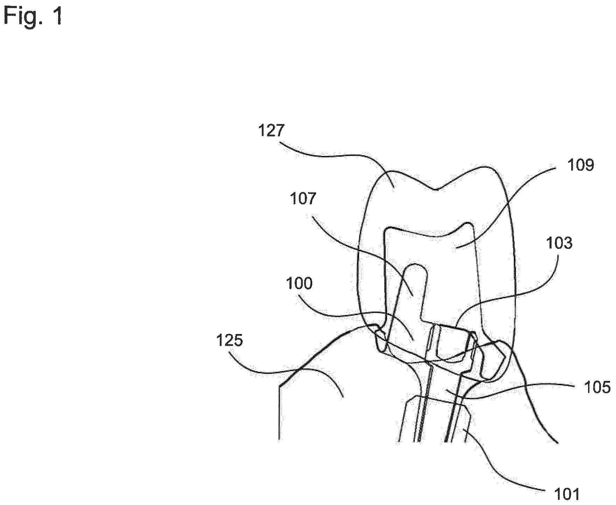

Fig. 1. zeigt eine schematische Ansicht des Abutmentaufsatzes 100 in einer Mundhöhle. Der Abutmentaufsatz 100 wird auf einem Kieferimplantat 101 befestigt und dient zum Aufsetzen eines Klebekörpers 109. Auf den Klebekörper 109 wird wiederum der Kronenklebekörper 127 einer Zahnkrone aufgeklebt. Der Klebekörper 109 ist aus einem weißen Material gebildet, wie beispielsweise durchgefärbtem Zirkon oder einer Keramik. Durch den weißen Klebekörper 109 entsteht ein natürlicheres Bild des Zahnersatzes.

Der Abutmentaufsatz 100 ist einstückig aus Metall gefertigt und kann mit Titannitrid beschichtet sein. Der Abutmentaufsatz 100 wird mittels einer Befestigungsschraube 105 auf dem eingeschraubten Kieferimplantat 101 befestigt. Die Befestigungsschraube 105 wird hierzu in eine Öffnung 103 des Abutmentaufsatzes 100 eingesetzt und in das Kieferimplantat 101 eingesetzt. Der Abutmentaufsatz 100 umfasst einen seitlich versetzten Klebebasisabschnitt 107, der neben der Öffnung 103 hervorsteht. Durch den seitlich oberhalb der Öffnung 103 angeordneten Klebebasisabschnitt 107 können sowohl vertikale als auch horizontale Kräfte gut aufgenommen und abgestützt werden. Die Gesamtkonstruktion ist vom Zahnfleisch 125 umgeben.

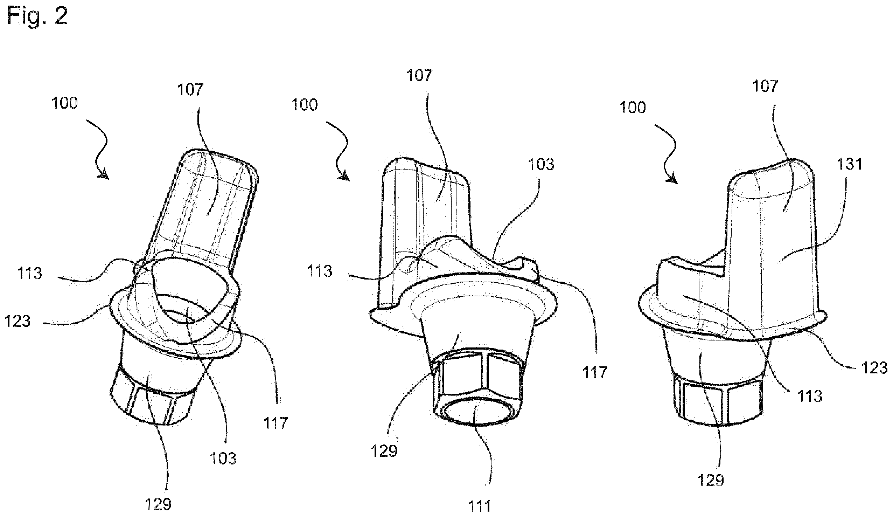

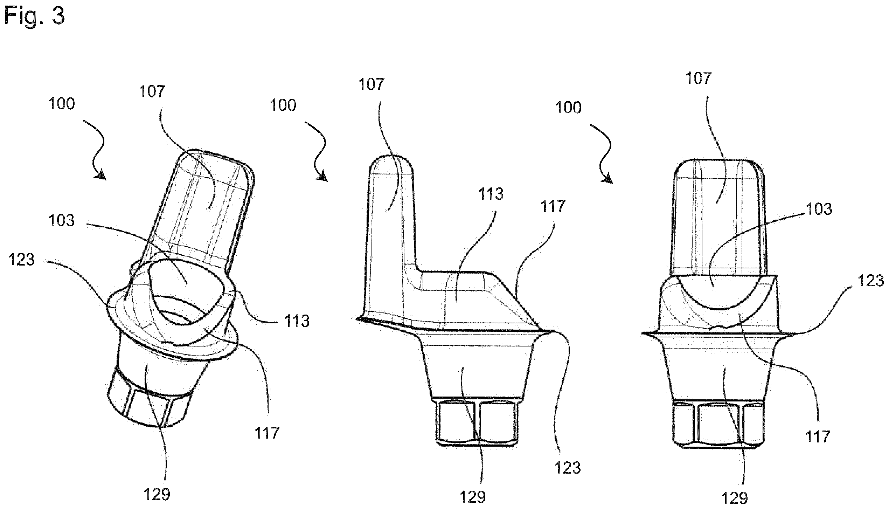

Fig. 2 und Fig. 3 zeigen mehrere Ansichten eines Abutmentaufsatzes 100 in vergrößerter Ansicht. Der Abutmentaufsatz 100 ist spiegelsymmetrisch aufgebaut. Die Befestigungsschraube 105 wird von oben in die Öffnung 103 des Abutmentaufsatzes 100 eingesetzt und durch den zylindrischen Schraubkanal 111 in den Abutmentaufsatz 100 geschoben. Der gesamte Abutmentaufsatz 100 weist beispielsweise eine Gesamthöhe von 7,5 mm auf. Der Klebebasisabschnitt 107 weist an der Innenseite eine Höhe von 2,5 mm und an der Außenseite eine Höhe von 4,3 mm auf.

Anschließend wird die Befestigungsschraube 105 in ein Innengewinde des Kieferimplantats 101 eingeschraubt. Dadurch drückt die Befestigungsschraube 105 den Abutmentaufsatz 100 auf das Kieferimplantat 101. An der Unterseite umfasst der Abutmentaufsatz 100 einen konischen Befestigungsabschnitt 129. An der Unterseite des Befestigungsabschnittes 129 befindet sich wiederum ein Sechskantabschnitt als Verdrehsicherung. Der Sechskantabschnitt wird in eine entsprechende Aussparung in dem Kieferimplantat 101 eingesetzt.

Der Abutmentaufsatz 100 umfasst einen vorstehenden Rand 123, der den aufgesetzten Klebekörper 109 umlaufend abstützt. Oberhalb des Randes 123 befindet sich die Klebebasis 131 des Abutmentaufsatzes 100. Unterhalb des Randes 123 ist der konische Befestigungsabschnitt 129 angeordnet.

Auf die Fläche der Klebebasis 131 wird der Klebekörper 109 mittels eines Klebers aufgeklebt. Ein Schraubenkopf der Befestigungsschraube 105 wird von einem Kragen 113 der Klebebasis 131 umgeben. Der Kragen 113 ist ebenfalls ein Abschnitt der Klebebasis 131. Die Wand des Kragens 113 verjüngt sich ebenfalls nach oben hin, so dass der Klebekörper auf einfache Weise aufgesetzt werden kann. Durch den Kragen 113 wird die Klebefläche der Klebebasis 131 vergrößert und der Schraubenkopf vor einer seitlichen Berührung mit dem Kleber geschützt. Der Kragen 113 umfasst an der Vorderseite eine Abschrägung 117, die dem Klebebasisabschnitt 107 gegenüberliegt
Seitlich der Öffnung 103 umfasst die Klebebasis 131 einen Klebebasisabschnitt 107, der neben der Öffnung 103 angeordnet ist und zungenförmig in der gleichen Richtung wie der Schraubkanal 111 über die Öffnung 103 hinausragt. Der Klebebasisabschnitt 107 verjüngt sich zur Spitze hin und ist ohne Ecken und Kanten in einer abgerundeten Weise ausgebildet. Jede Krümmung der Klebebasis 131 weist einen bestimmten minimalen Krümmungsradius auf, so dass die entsprechende Aussparung in dem Klebekörper 109 mit einem Radiusfräser hergestellt werden kann. Der Krümmungsradius beträgt beispielsweise 0,5 mm. Da die Krümmung dem Radius des Radiusfräsers entspricht, entsteht eine gleichmäßige Passung zum Klebekörper 109.

Der Klebebasisabschnitt 107 vergrößert die Fläche der Klebebasis 131 nach oben hin und sorgt für eine hohe Festigkeit der Verbindung mit dem Klebekörper 109. Die seitliche Anordnung des Klebebasisabschnittes 107 neben der Öffnung 103 ermöglicht, dass der Klebekörper 109 mit einer großen Abschrägung oberhalb der Öffnung 103 ausgebildet werden kann, ohne dass eine vorgegebene minimale Wandstärke des Klebekörpers 109 oberhalb der Öffnung 103 unterschritten wird. Dadurch kann der Klebekörper 109 und die Gesamtkonstruktion besser an die räumlichen Gegebenheiten innerhalb der Mundhöhle angepasst werden. Die Befestigungsschraube 105 kann auf einfache Weise in die Öffnung 103 und den darunter liegenden Schraubkanal 111 eingeführt werden. Der zungenförmige Klebebasisabschnittes 107 weist beispielsweise eine Breite von 3 mm bis 6 mm auf.

Der Klebebasisabschnitt 107 ragt über den Rand der Öffnung 103 hinaus und ist als Teil der Klebebasis 131 vollständig räumlich getrennt, seitlich versetzt neben der Öffnung 103 angeordnet. Dadurch wird der Vorteil erreicht, dass ein hoher Versatz gegenüber dem Befestigungsabschnitt 129 hergestellt wird. Ein Schraubkanal 111 braucht keine abgewinkelte Form aufweisen, so dass auf das Herumführen der Befestigungsschraube 105 um eine Kante innerhalb eines abgewinkelten Schraubkanals verzichtet werden kann. Die Befestigung des Abutmentaufsatzes 100 an dem Kieferimplantat 101 wird dadurch deutlich erleichtert und vereinfacht. Trotzdem weist der Abutmentaufsatz 100 eine hohe Stabilität auf.

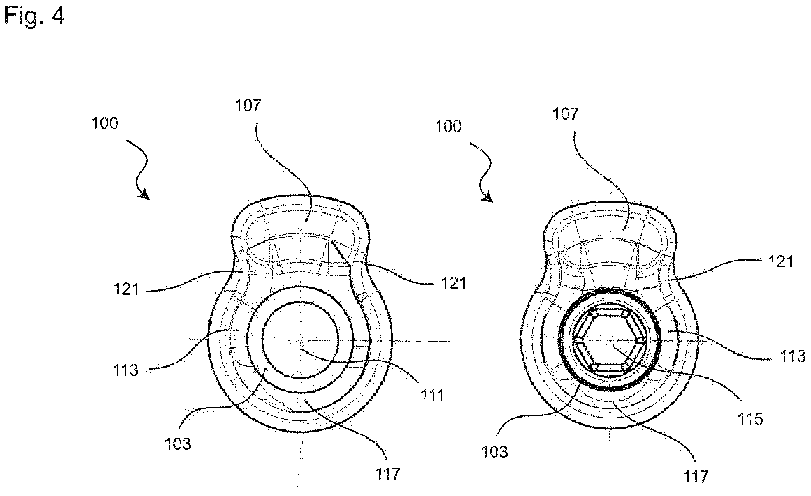

Fig. 4 zeigt zwei Aufsichten auf den Abutmentaufsatz 100 ohne eingesetzte Befestigungsschraube 105 und mit eingesetzter Befestigungsschraube 105. Der Schraubenkopf 115 der Befestigungsschraube 105 wird konzentrisch von dem Kragen 113 umgeben. Der Klebebasisabschnitt 107 verläuft im Querschnitt kreisbogenförmig zur Mitte des Schraubkanals 111. Dadurch werden Hebelkräfte gleichmäßig auf den Befestigungsabschnitt 129 übertragen und die Fläche der Klebebasis 131 vergrößert. Die Seiten des Klebebasisabschnitts 107 sind im Querschnitt halbkreisförmig abgerundet. Diametral zu dem Schraubkanal 111 gegenüber zu dem Klebebasisabschnitt 107 ist die Abschrägung 117 des Kragens 113 angeordnet.

Der Kragen 113 geht mit zwei gegenüberliegenden konkaven Aussparungen 121 in den Klebebasisabschnitt 107 über. Durch die Aussparungen 121 ergibt sich eine beidseitige Nierenform der Klebebasis 131. Dadurch wird die Klebefläche der Klebebasis 131 vergrößert und eine Positionierung des Klebekörpers 109 auf der Klebebasis 131 erleichtert.

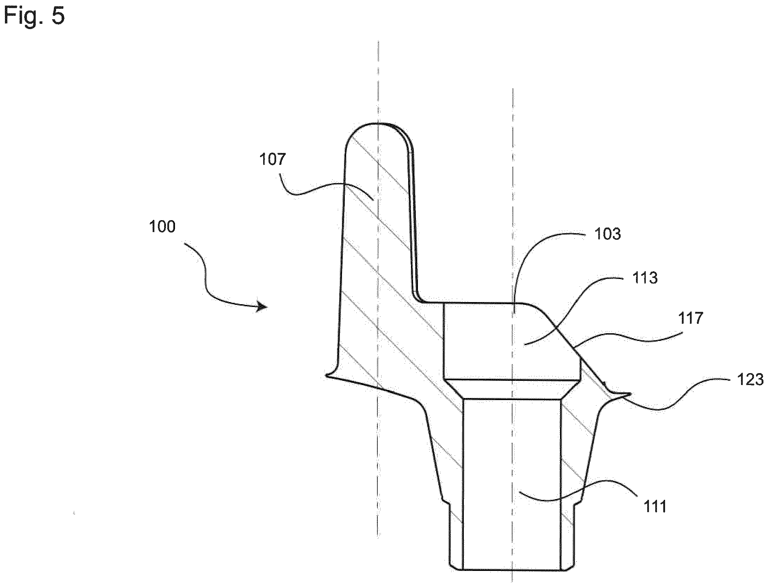

Fig. 5 zeigt eine Querschnittsansicht durch den Abutmentaufsatz 100. Der zungenförmige Klebebasisabschnitt 107 verläuft parallel versetzt zu dem Schraubkanal 111 für die Befestigungsschraube 105. Der Versatz zwischen dem Schraubkanal 111 und dem Klebebasisabschnitt 107 beträgt beispielsweise 0,5 mm.

Die Abschrägung 117 des Kragens 113 reicht diagonal bis zu dem vorstehenden Rand 123 zum Abstützen des Klebekörpers 109. Die Abschrägung 117 beginnt ungefähr bei der Mitte des Schraubkanals 111. Insgesamt ergibt sich eine L-förmige Klebebasis 131, deren einer Schenkel durch den Klebebasisabschnitt 107 und deren andere Schenkel durch den Kragen 113 gebildet wird. Die Abschrägung weist beispielsweise einen Winkel von 45° auf. Im Allgemeinen kann die Abschrägung jedoch einen Winkel von 0° bis 50° aufweisen.

Der Kragen 113 und der Klebebasisabschnitt 107 stehen senkrecht aufeinander. Im Allgemeinen können jedoch der Kragen 113 und der Klebebasisabschnitt 107 auch in einem anderen Winkel zueinander stehen. Zudem kann die gesamte Klebebasis 131 mit dem hervorragenden Klebebasisabschnitt 107 und dem Kragen 113 gegenüber dem Schraubkanal 101 um einen Winkel von -30° bis +30° geneigt sein. Bei dieser Neigung ist sowohl der Klebebasisabschnitt 107 als auch der Kragen 113 geneigt, so dass der senkrechte Winkel zwischen Klebebasisabschnitt 107 und dem Kragen 113 erhalten bleibt. Die Form der Klebebasis 131 bleibt dadurch im Wesentlichen erhalten.

Die Kante zwischen dem Kragen 113 und dem Klebebasisabschnitt 107 ist abgerundet ausgebildet, so dass die entsprechende Stelle in dem Klebekörper 109 mit einem Radiusfräser hergestellt werden kann. Zudem wird dadurch die Bruchfestigkeit der Verbindung erhöht.

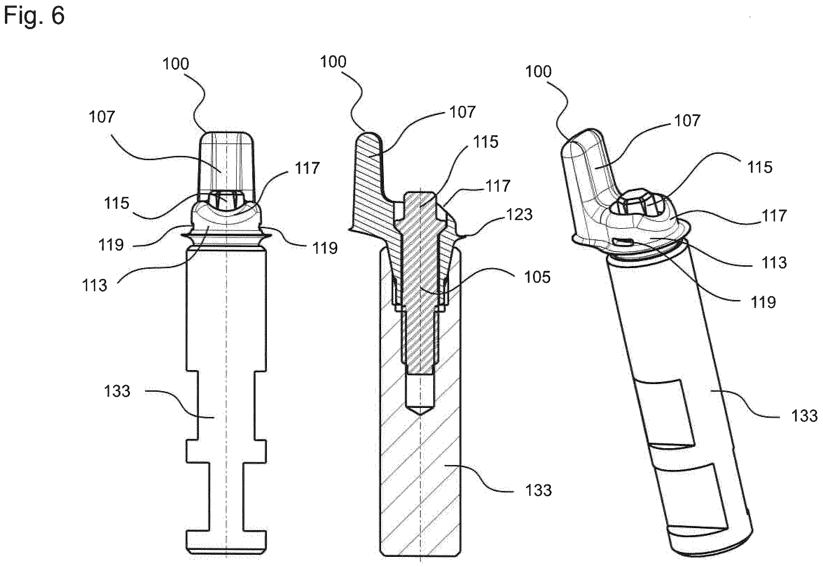

Fig. 6 zeigt mehrere Ansichten des Abutmentaufsatzes 100 in einem Übertragungspfosten 133. Der Übertagungspfosten 133 dient zur Wiedergabe der räumlichen Verhältnisse des Kieferimplantats 101 in einem Gipsmodell. Aus der Öffnung 103 ragt ein Teil der Befestigungsschraube 115.

Der Kragen 113 umfasst an der Seite längliche Aussparungen 119 zum Einrasten des Klebekörpers 109. Die Aussparungen 119 sind auf gegenüberliegenden Seiten des Kragens 113 oberhalb des Randes 123 angeordnet. Die Aussparungen 119 liegen diametral an dem Schraubkanal 111 gegenüber. In die Aussparungen 119 greifen entsprechend angeordnete Vorsprünge ein, die innerhalb der Aussparung des Klebekörpers 109 angeordnet sind, so dass eine provisorische Befestigung des Klebekörpers 109 auf der Klebebasis 131 durch Aufstecken ermöglicht wird.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 100: Abutmentaufsatz
- 101: Kieferimplantat
- 103: Öffnung
- 105: Befestigungsschraube
- 107: Klebebasisabschnitt
- 109: Klebekörper
- 111: Schraubkanal
- 113: Kragen
- 115: Schraubenkopf
- 117: Abschrägung
- 119: Aussparungen
- 121: Aussparung
- 123: Rand
- 125: Zahnfleisch
- 127: Kronenklebekörper
- 129: Befestigungsabschnitt
- 131: Klebebasis
- 133: Übertagungspfosten

## Patentansprüche

1. Abutmentaufsatz (100), der auf einem Kieferimplantat (101) befestigbar ist, mit:
einer im Querschnitt L-förmigen Klebebasis (131), deren einer Schenkel durch einen Klebebasisabschnitt (107) und deren anderer Schenkel durch einen Kragen (113) gebildet wird;
einer Öffnung (103) zum Einsetzen einer Befestigungsschraube (105); und wobei
der Klebebasisabschnitt (107) zum Bilden einer Klebebasis für einen Klebekörper (109) zungenförmig, pfostenförmig oder stiftförmig ist, seitlich neben der Öffnung (103) angeordnet ist und über die Öffnung (103) hinausragt.

2. Abutmentaufsatz (100) nach Anspruch 1, wobei der Klebebasisabschnitt (107) parallel versetzt zu einem Schraubkanal (111) für die Befestigungsschraube (105) verläuft.

3. Abutmentaufsatz (100) nach einem der vorangehenden Ansprüche, wobei sich der Klebebasisabschnitt (107) zur Spitze hin verjüngt.

4. Abutmentaufsatz (100) nach einem der vorangehenden Ansprüche, wobei der Klebebasisabschnitt (107) kantenlos ausgebildet ist.

5. Abutmentaufsatz (100) nach einem der vorangehenden Ansprüche, wobei der Klebebasisabschnitt (107) im Querschnitt kreisbogenförmig zur Mitte des Schraubkanals (111) verläuft.

6. Abutmentaufsatz (100) nach einem der vorangehenden Ansprüche, wobei die Seiten des Klebebasisabschnitts (107) im Querschnitt halbkreisförmig abgerundet sind.

7. Abutmentaufsatz (100) nach Anspruch 1, wobei der Kragen (113) eine Abschrägung (117) aufweist, die dem Klebebasisabschnitt (107) gegenüberliegt.

8. Abutmentaufsatz (100) nach Anspruch 7, wobei die Abschrägung (117) bis zu einem vorstehenden Rand (123) zum Abstützen des Klebekörpers (109) reicht.

9. Abutmentaufsatz (100) nach Anspruch 7 oder 8, wobei die Abschrägung (117) bis zu einer Mitte des Schraubkanals (111) reicht.

10. Abutmentaufsatz (100) nach einem der Ansprüche 1 oder 7 bis 9, wobei der Kragen (113) Aussparungen (119) zum Einrasten des Klebekörpers (109) umfasst.

11. Abutmentaufsatz (100) nach Anspruch 10, wobei die Aussparungen (119) auf gegenüberliegenden Seiten des Kragens (113) angeordnet sind.

12. Abutmentaufsatz (100) nach einem der Ansprüche 1 oder 7 bis 11, wobei der Kragen (113) mit einer konkaven Aussparung (121) in den Klebebasisabschnitt (107) übergeht.

13. Abutmentaufsatz (100) nach einem der vorangehenden Ansprüche, wobei der Abutmentaufsatz (100) eine Klebebasis umfasst, die gegenüber dem Schraubkanal (111) geneigt ist.

## Claims

1. Abutment attachment (100) which can be fixed to a jaw implant (101), comprising:
an adhesive base (131) of L-shaped cross section, one limb of which is formed by an adhesive base portion (107) and the other limb of which is formed by a collar (113);
an opening (103) for inserting a fixing screw (105); and wherein,
for forming an adhesive base for an adhesive body (109), the adhesive base portion (107) is tongue-shaped, post-shaped or pin-shaped, is arranged laterally alongside the opening (103), and protrudes beyond the opening (103).

2. Abutment attachment (100) according to claim 1, wherein the adhesive base portion (107) is offset in parallel from a screw channel (111) for the fixing screw (105).

3. Abutment attachment (100) according to any of the preceding claims, wherein the adhesive base portion (107) tapers towards the tip.

4. Abutment attachment (100) according to any of the preceding claims, wherein the adhesive base portion (107) is formed edgeless.

5. Abutment attachment (100) according to any of the preceding claims, wherein the adhesive base portion (107) extends in an arc shape in cross section with respect to the centre of the screw channel (111).

6. Abutment attachment (100) according to any of the preceding claims, wherein the faces of the adhesive base portion (107) are rounded in a semicircle shape in cross section.

7. Abutment attachment (100) according to claim 1, wherein the collar (113) has a bevel (117) positioned opposite the adhesive base portion (107).

8. Abutment attachment (100) according to claim 7, wherein the bevel (117) reaches as far as a protruding rim (123) for bracing the adhesive body (109) .

9. Abutment attachment (100) according to either claim 7 or claim 8, wherein the bevel (117) reaches as far as a centre of the screw channel (111).

10. Abutment attachment (100) according to any of claims 1 or 7 to 9, wherein the collar (113) comprises clearances (119) for latching the adhesive body (109) in.

11. Abutment attachment (100) according to claim 10, wherein the clearances (119) are arranged on opposite faces of the collar (113).

12. Abutment attachment (100) according to any of claims 1 or 7 to 11, wherein the collar (113) transitions into the adhesive base portion (107) via a concave clearance (121).

13. Abutment attachment (100) according to any of the preceding claims, wherein the abutment attachment (100) comprises an adhesive base which is inclined with respect to the screw channel (111).

## Revendications

1. Embase de pilier (100), pouvant être fixée sur un implant maxillaire (101), comportant :
une base de collage (131) à section transversale en forme de L, dont une patte est formée par une section de base de collage (107) et dont l'autre patte est formée par un collet (113) ;
une ouverture (103) permettant d'insérer une vis de fixation (105) ; et dans laquelle
la section de base de collage (107) est en forme de langue, de poteau ou de tige afin de former une base de collage pour un corps de collage (109), est agencée latéralement à côté de l'ouverture (103) et dépasse au-dessus de l'ouverture (103).

2. Embase de pilier (100) selon la revendication 1, dans laquelle la section de base de collage (107) est décalée en parallèle par rapport à un canal de vissage (111) pour la vis de fixation (105).

3. Embase de pilier (100) selon l'une des revendications précédentes, dans laquelle la section de base de collage (107) se rétrécit en pointe.

4. Embase de pilier (100) selon l'une des revendications précédentes, dans laquelle la section de base de collage (107) est réalisée sans bords.

5. Embase de pilier (100) selon l'une des revendications précédentes, dans laquelle la section de base de collage (107) s'étant en section transversale en forme d'arc de cercle jusqu'au centre du canal de vissage (111).

6. Embase de pilier (100) selon l'une des revendications précédentes, dans laquelle les côtés de la section de base de collage (107) sont arrondis en section transversale en demi-cercle.

7. Embase de pilier (100) selon la revendication 1, dans laquelle le collet (113) présente un biseautage (117), lequel est opposé à la section de base de collage (107).

8. Embase de pilier (100) selon la revendication 7, dans laquelle le biseautage (117) s'étend jusqu'à un bord en saillie (123) afin de soutenir le corps de collage (109).

9. Embase de pilier (100) selon la revendication 7 ou 8, dans laquelle le biseautage (117) s'étend jusqu'à un centre du canal de vissage (111).

10. Embase de pilier (100) selon l'une des revendications 1 ou 7 à 9, dans laquelle le collet (113) comprend des évidements (119) pour l'emboîtement du corps de collage (109).

11. Embase de pilier (100) selon la revendication 10, dans laquelle les évidements (119) sont agencés sur des côtés opposés du collet (113).

12. Embase de pilier (100) selon l'une des revendications 1 ou 7 à 11, dans laquelle le collet (113) se transforme avec un évidement concave (121) dans la section de base de collage (107).

13. Embase de pilier (100) selon l'une des revendications précédentes, dans laquelle l'embase de pilier (100) comprend une base de collage, laquelle est inclinée par rapport au canal de vissage (111).
